# EUROPEAN PATENT SPECIFICATION

(11) **EP 2 796 179 B1**
(45) Date of publication and mention of the grant of the patent: **27.06.2018**
(21) Application number: 14165290.9
(22) Date of filing: 18.04.2014
(51) Int. Cl.: B01D 35/153, B01D 35/16

(54) **CARTRIDGE FOR FILTERING LIQUIDS**
FILTERKARTUSCHE ZUM FILTERN VON FLÜSSIGKEITEN
CARTOUCHE DE FILTRATION POUR FILTRER DES LIQUIDES

(30) Priority: 23.04.2013 IT TO20130325
(43) Date of publication of application: 29.10.2014
(73) Proprietor: N.D.R. S.R.L. Soc. Unipersonale, 10060 Bricherasio (Torino) (IT)
(72) Inventor: Nota, Marco, 10060 Bricherasio (Torino) (IT)
(74) Representative: Robba, Pierpaolo

(56) References cited:
- EP-A1- 1 479 427
- WO-A1-2013/178680
- WO-A2-2009/132291
- DE-A1-102004 038 814
- DE-A1-102009 049 868

## Description

### Technical field

The present invention generally relates to a cartridge for filtering liquids for a filter comprising at least an inlet channel, at least an outlet channel and at least a bleed channel connected to the inlet channel.
Particularly, the present invention relates to a cartridge to be applied to filters for filtering oil of internal combustion engines.

### Prior Art

Cartridges for filtering liquids to be applied to filters for liquids are known.

For example, a filter and a cartridge for filtering oil of internal combustion engines are known from the patent document WO0130480A1.

The known cartridge comprises two flanges, typically an upper and a lower flange and a filter element held between the two flanges.

In use, the filter cartridge provides an inlet area for non-filtered oil connected to the inlet channel of the filter, an outlet area for filtered oil connected to the outlet channel of the filter and a sealing pin adapted to penetrate into the filter bleed channel to close, in a watertight manner, the bleed or discharge channel that is connected to the inlet channel.

According to this prior art it is provided that the sealing pin is made on the lower flange or bottom flange so that, in case of extraction of the cartridge, the bleed channel which is connected to the inlet channel of the filter is simultaneously left open.

DE 10 2004 038814 A1 discloses a filter cartridge provided with removable connection means configured to be removable attachable to a drainage plate having in turn complementary connection means for removably attach the drainage plate to the filter cartridge.

A technical problem of the known solution is the lack of flexibility of use of the cartridge when inserting and removing the filter.

Indeed, the insertion of the cartridge necessarily implies the activation of all the filtering functions and its extraction necessarily means draining of non-filtered oil, with possible pollution by the filtered oil in the filter outlet channel.

Generally speaking, the Applicant has realized that the prior art has no solution capable of effectively solving the problem mentioned above.

### Summary of the Invention

It is an object of the present invention to solve the problem of flexibility of use mentioned above.

The object is achieved by the cartridge for filtering liquids as claimed.

The claims are integral part of the technical teaching provided herein in respect of the invention.

The following brief description of the invention is given in order to provide a basic understanding of some aspects of the invention.

This brief description is not an extended description and as such should not be seen as likely to identify key or critical elements of the invention, or expected to outline the scope of the invention. Its sole purpose is to present some concepts of the invention in a simplified form as a preview to the detailed description below. The cartridge for filtering liquids of the invention comprises a cartridge filter, a drainage device adapted to allow the passage of filtered liquid towards an outlet channel of the filter, the drainage device being configured to be removably attachable to the cartridge filter.

In accordance with a further feature of the present invention, the cartridge filter comprises a first flange, a second flange and a filtering material held between said first flange and said second flange, said second flange being configured so that its first surface is adapted to be fixed to the filtering material and a second surface, opposite to the first surface, comprises connection means configured to be removably attachable to the drainage device. The drainage device comprises complementary means removably attachable to said connection means of the second flange.

### Brief Description of the Figures

The above and other features and advantages of the present invention will become apparent from the following description of preferred embodiments, made by way of nonlimiting example with reference to the accompanying drawings, in which elements denoted by a same or a similar numerical reference denote components having similar functions and construction and in which:
Figure 1 shows a sectional view of the filter assembly;
Figure 2 shows a cartridge filter and a drainage device as provided in the filter assembly of Fig 1;
Figure 3 shows details of construction of the drainage device and the cartridge filter of Fig. 2; and

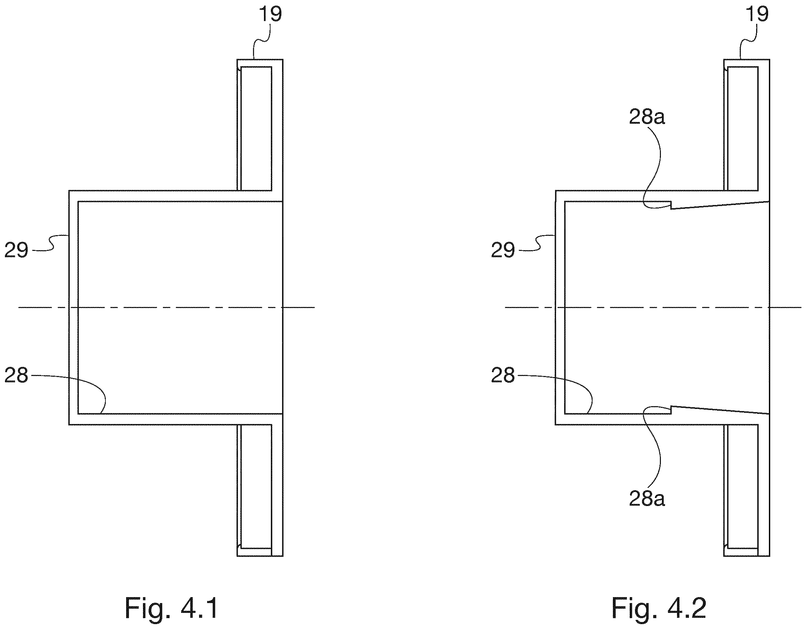

Figure 4.1 shows an element of the cartridge filter that is not an embodiment of the present invention;
Figure 4.2 shows an element of the cartridge filter according to the present invention.

### Description of Preferred Embodiments

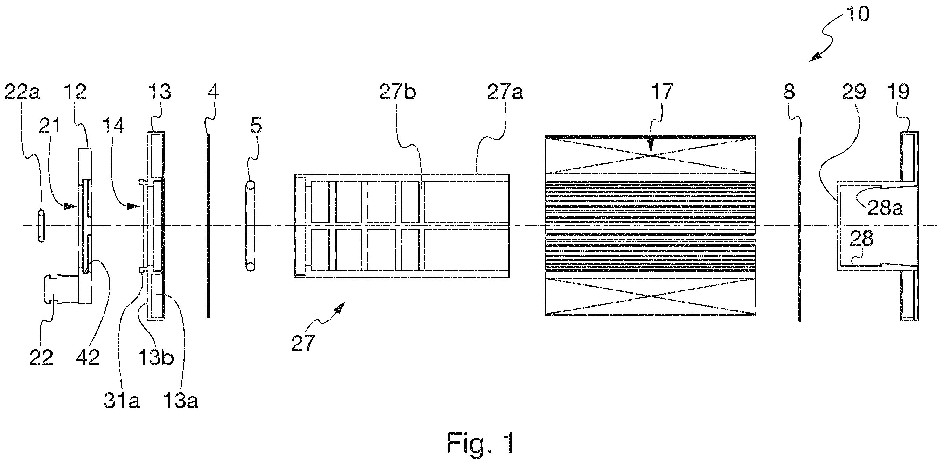

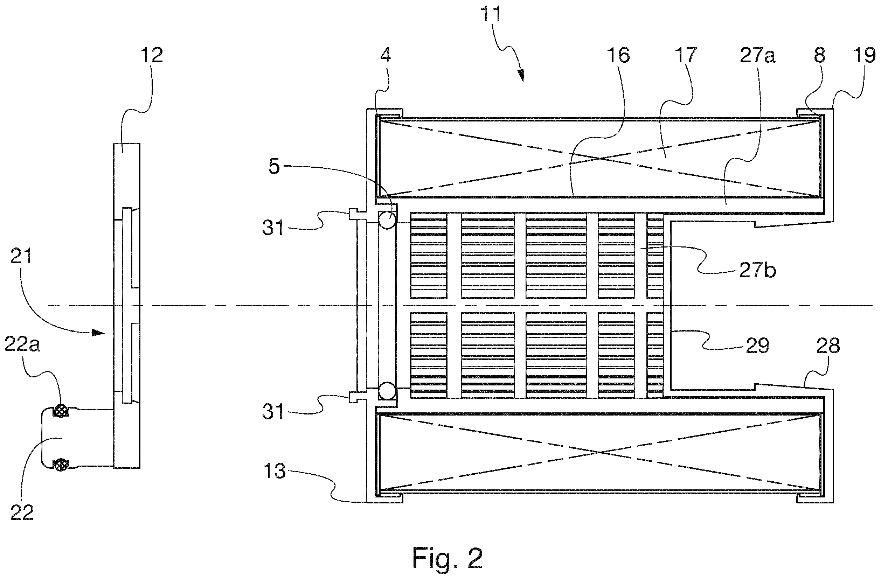

With reference to Figures 1 and 2 a filter cartridge assembly or a cartridge for filtering liquids 10 for a filter known in the art having at least an inlet channel, at least an outlet channel and at least a bleed channel, all contained in a housing closable with a cover, comprises, according to the present invention, a modular cartridge or cartridge filter 11 and a drainage component or drainage device 12 removably attachable to the cartridge filter 11.

The cartridge filter 11 preferably comprises a first flange or first base 19, hereafter referred to as upper base 19, a second flange or second base 13, hereafter referred to as lower base 13, and a filtering material 17 known in the art, held, for example by gluing, between the upper base 19 and the lower base 13 along a longitudinal axis of the cartridge filter, preferably a symmetry axis of the same.

The filtering material 17 is arranged so as to define an inner surface 16 having a preferably cylindrical section, and being in contact with an internal support structure 27 and adapted to provide, in cooperation with the internal support structure or candle 27, having preferably a grid-like structure, surfaces for the passage of the liquid, i.e. oil, towards an outlet channel of the filter.

The internal support structure or candle 27 comprises openings so as not to obstruct the passage of the liquid through the filtering material 17.

The upper base 19 has the form of a closed cylinder with an internal cylindrical surface 28 and with a closed end 29.

The shape of the internal cylindrical surface 28 allows the filter cartridge assembly 10 of the invention to rotate independently from the filter cover when the cover is tightened on the filter housing.

The upper base 19 is adapted to provide a top cap to the filtering material 17, with the closed end 29 arranged transversely to the longitudinal axis of the cartridge filter 11 and internally to the internal support structure or candle 27.

According to the invention it is provided that the internal cylindrical surface 28 of the upper base 19 comprises a sawtooth element 28a configured so that it can be coupled to the cover of the filter when the cover is tightened on the filter housing.

The shape of the internal cylindrical surface 28 of the upper base 19 allows the cartridge assembly to rotate independently from the filter cover, when said cover is tightened on the filter housing.

Preferably, the candle 27 comprises columns 27a parallel to the longitudinal axis of the cartridge filter 11, for example, four columns, and ribs 27b, preferably circular, arranged, for example, so as to be present, in use, only in an area not interfering with the upper base 19, when inserted, so as not to obstruct the passage of the liquid through the filtering material 17.

The lower base 13, in use, is arranged transversely to the longitudinal axis of the cartridge filter 11 and comprises a through hole 14, preferably axial, adapted to allow the passage of filtered liquid towards the outlet channel of the filter.

According to the preferred embodiment the lower base 13 is configured so that its first surface or side 13a is adapted to be fixed to the filtering material 17, and that a second surface or side 13b, opposite to the first, comprises removable connection means 31 configured to be removably attachable to the drainage device 12; preferably the first surface or side 13a is connected or fixed to the filtering material 17 and the connection means 31 are configured to be removably attachable to corresponding complementary means 41 provided in the drainage device 12.

Preferably, the lower base 13 is configured so that the first surface or side 13a is adapted to be fixed to the candle 27 and to the filtering material 17; more preferably, the lower base 13 is configured so that the first surface or side 13a is connected or fixed to the candle 27 and to the filtering material 17.

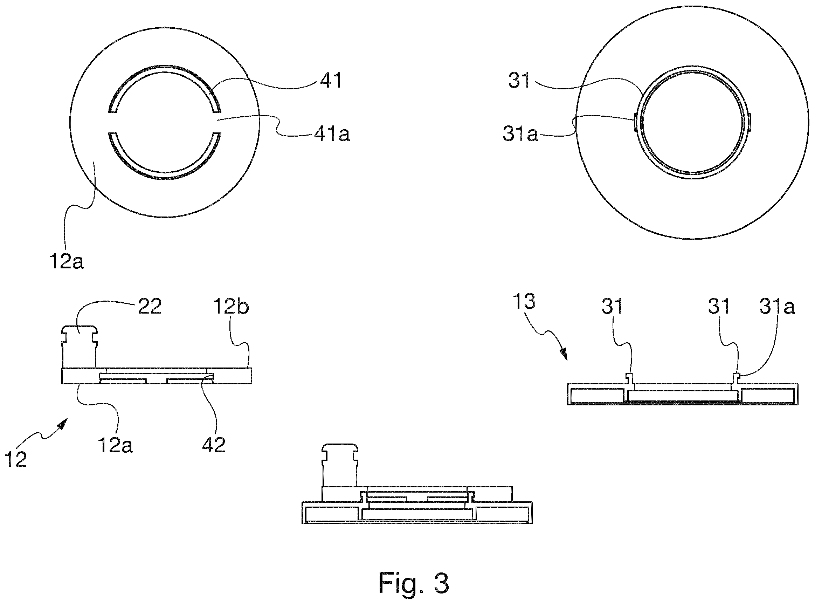

The connection means 31 shown in Fig. 3 can be comprise for example of one or more tongues 31a, preferably of different size and/or shape, adapted to be inserted into a groove or cavity 42 of the drainage device 12 for example through corresponding slots 41a, as will be later described in detail. The removable connection means 31 are constituted by an elastic element, for example an elastic gasket, or one or more tongues, fixed to the lower base 13 and adapted to be inserted, preferably to be snapped, into a groove or a cavity free of slots and provided in the drainage device 12.

The drainage device 12, preferably circular, comprises a through hole 21, preferably axial, to allow the passage of the filtered liquid towards the outlet channel of the filter and is configured so that it can be coupled in a removable manner to the cartridge filter 11.

Particularly, the drainage device 12 comprises, on a first surface or side 12a, transversely to the axis of its through hole 21, the complementary means 41 configured to be removably attachable and, on a second surface or side 12b opposite to the first surface 12a, a sealing pin 22 provided for hydraulically sealing the filter bleed channel.

The complementary means 41, in the preferred embodiment of Figure 3, comprise, for example, a groove or cavity 42 and one or more slots 41a, preferably of different size and/or shape and configured so that the corresponding tongues 31a of the cartridge filter 11 can be inserted into the slots 41a and rotated inside the groove 42 to connect the cartridge filter 11 to the drainage device 12, if required.

The sealing pin 22, of known type, is associated, preferably, to a sealing gasket 22a so as to prevent, when inserted into the filter bleed channel, the leakage of liquid through the same channel.

Preferably, at least one sealing member 5 is associated to the lower base 13 and/or to the candle 27, respectively.

Preferably, the filtering material 17 is connected to the upper base 19 and to the lower base 13 by means of a glue 4, 8, of known type.

The operation of the system described above is the following.

During the mounting of the cartridge assembly 10 in the filter housing, there is a first step of assembling the cartridge assembly 10, in which the drainage device 12 is connected to the cartridge filter 11.

Particularly, the cartridge filter 11 is connected to the complementary means 41 of the drainage device 12; preferably the tongues 31a of the lower base 13 are inserted into the slots 41a and rotated inside the groove 42 to connect the cartridge filter 11 to the drainage device 12.

In a second step, the cartridge assembly 10 is pushed into the housing so that the sealing pin 22 is inserted in the filter bleed channel.

Preferably, the sealing gasket 22a associated to the sealing pin 22 ensures the liquid-tight mounting of the cartridge assembly 10 on the filter bleed channel.

In a third mounting step, the filter cover is fixed, for example by screwing, to the housing until it comes into abutment against the cartridge assembly 10, particularly against the upper base 19.

Advantageously, in this third step of tightening the cover on the filter housing, the filter cartridge assembly 10 of the invention can freely rotate independently from the filter cover, thus avoiding torsion and the consequent damage of the filtering material 17 of the cartridge filter 11 when closing the cover.

Advantageously, in this third step of tightening the cover on the filter housing, the cartridge filter 11 of the invention can freely rotate independently of the drainage device 12, thus avoiding torsion and the consequent damage of the filtering material 17 of the cartridge filter 11 when closing the cover. The upper base 19 with the form of a cylinder has the advantage of driving the cartridge filter 11, thus facilitating the installation thereof.

Moreover, the closed end 29 of the cylinder advantageously excludes the possibility of leakage and consequent pollution of the filtered oil by the oil still to be filtered.

During the step of opening and removal of the cover from the housing, in the embodiment in which the upper base 19 has the internal cylindrical surface 28 which is flat, the cover can freely rotate and during rotation the cartridge assembly remains inserted in the housing, thus maintaining the drainage device 12 stopped, the sealing pin 22 being inserted liquid-tight in the filter bleed channel.

Advantageously, in this step of opening and removal of the cover on the filter housing, the cartridge filter 11 of the invention can freely rotate independently of the drainage device 12, thus avoiding torsion and the consequent damage of the filtering material 17 of the cartridge filter 11.

It is also possible for an operator, possibly helped by appropriate fittings on the upper base 19, to position the filter cartridge 11 so that the tongues 31a are in correspondence with the slots 41a and so it is possible to remove the cartridge filter 11 without removing the drainage device 12.

Advantageously, this embodiment allows the operator to decide whether to bleed the oil present in the filter housing through the bleed channel, by removing the drainage device, or to keep the oil in the housing, thus allowing to view its state and the presence of impurities or external agents.

In particular, the invention allows to reuse the drainage device 12 and replace only the cartridge filter 11 in the subsequent maintenance, thus enabling cost savings and reduced environmental pollution.

Advantageously, various types of filter cartridges 11 with different filtration characteristics and sizes can be adapted to the drainage device 12, thus allowing a greater standardization of the cartridges used.

During the step of opening and removal of the cover from the housing according to the invention in which the internal cylindrical surface 28 of the upper base 19 comprises the sawtooth element 28a, the rotation of the filter cover that stays attached to the upper base allows to remove the complete cartridge assembly in a single strep.

Of course, obvious changes and / or variations are possible to the above description, in dimensions, shapes, materials, components, circuit elements, connections and contacts, as well as in the details of the circuitry, the illustrated construction and the method of operating without departing from the scope of the invention as defined in the appended claims.

## Claims

1. Cartridge for filtering liquids (10) comprising:
- a cartridge filter (11) comprising a first flange (19), a second flange (13) and a filtering material (17) held between said first flange (19) and said second flange (13) and defining an inner surface (16) having a cylindrical section, said second flange (13) having a first surface (13a) connected to the filtering material (17) and a second surface (13b) opposite to the first surface (13a), comprising removable connection means (31) configured to be removably attachable to a drainage device (12);
- said drainage device (12) comprising a through hole (21) for the passage of filtered liquid towards an outlet channel of the filter, said drainage device (12) further comprising complementary means (41) arranged on a first surface (12a) and removably attachable to said connection means (31) of the second flange (13), and a sealing pin (22) arranged on a second surface (12b) opposite to the first surface (12a) of the drainage device (12) and provided for hydraulically sealing the filter bleed channel;
wherein said removable connection means (31) are constituted by an elastic element and said complementary means (41) are constituted by a groove (42), wherein said first flange (19) has the form of a closed cylinder with internal cylindrical surface (28) and closed end (29) for avoiding leakage and pollution of the filtered oil by the oil still to be filtered and provides a top cap on the filtering material (17) with the closed end (29) arranged transversely to the longitudinal axis of the cartridge filter (11) and internally to an internal support structure (27), said internal support structure (27) comprising openings adapted not to obstruct the passage of the liquid through the filtering material (17), **characterized in that** the internal cylindrical surface (28) of the first flange (19) comprises a sawtooth element (28a) configured so that it can be coupled to the cover of the filter when the cover is tightened on the filter housing.

2. Cartridge for filtering liquids (10) according to claim 1, **characterized in that** said connection means (31) are constituted by at least one tongue (31a) and said complementary means (41) of the drainage device (12) are constituted by a groove (42) with at least one corresponding slot (41a), said tongue (31a) being adapted to be inserted into said slot (41a) and rotated inside the groove (42).

3. Cartridge for filtering liquids (10) according to claim 1, **characterized in that** said first surface (13a) of said second flange (13) is fixed to said internal support structure (27).

4. Cartridge for filtering liquids (10) according to claim 3, **characterized in that** said filtering material (17) is arranged so as to define an inner surface (16) in contact with said internal support structure (27) for providing surfaces for the passage of the liquid towards an outlet channel of the filter.

## Patentansprüche

1. Patrone zum Filtern von Flüssigkeiten (10), umfassend:
- einen Patronenfilter (11) mit einem ersten Flansch (19), einem zweiten Flansch (13) und einem Filtermaterial (17), das zwischen dem ersten Flansch (19) und dem zweiten Flansch (13) gehalten wird und eine innere Oberfläche (16) mit einem zylindrischen Abschnitt definiert, wobei der zweite Flansch (13) eine erste Oberfläche (13a) aufweist, die mit dem Filtermaterial (17) verbunden ist, und eine zweite Oberfläche (13b), die der ersten Oberfläche (13a) gegenüberliegt, umfassend ein entfernbares Verbindungsmittel (31) das derart konfiguriert ist, dass es entfernbar an einer Drainagevorrichtung (12) befestigbar ist;
- wobei die Drainagevorrichtung (12) ein Durchgangsloch (21) für den Durchgang gefilterter Flüssigkeit zu einem Auslasskanal des Filters aufweist, wobei die Drainagevorrichtung (12) ferner komplementäre Mittel (41) umfasst, die auf einer ersten Oberfläche (12a) angeordnet sind und abnehmbar an den Verbindungsmitteln (31) des zweiten Flansches (13) anbringbar sind, und einen Dichtungsstift (22) umfasst, der auf einer zweiten Oberfläche (12b) gegenüber der ersten Oberfläche (12a) der Drainagevorrichtung (12) angeordnet und vorgesehen ist, um den Filterablaufkanal hydraulisch abzudichten;
wobei die entfernbaren Verbindungsmittel (31) aus einem elastischen Element bestehen und die komplementären Mittel (41) aus einer Nut (42) bestehen, wobei der erste Flansch (19) die Form eines geschlossenen Zylinders mit einer inneren zylindrischen Oberfläche (28) und einem geschlossenem Ende (29) aufweist, zur Vermeidung von Auslaufen und der Verschmutzung des gefilterten Öls durch das noch zu filternde Öl und eine obere Kappe auf dem Filtermaterial (17) zur Verfügung stellt, wobei das geschlossene Ende (29) quer zur Längsachse des Patronenfilters (11) und innen in einer inneren Stützstruktur (27) angeordnet ist, wobei die innere Stützstruktur (27) Öffnungen aufweist, die den Durchgang der Flüssigkeit durch das Filtermaterial (17) nicht behindern, **dadurch gekennzeichnet, dass** die innere zylindrische Oberfläche (28) des ersten Flansches (19) ein Sägezahnelement (28a) aufweist, das so konfiguriert ist, dass es mit der Abdeckung des Filters gekoppelt werden kann, wenn die Abdeckung an dem Filtergehäuse festgezogen wird.

2. Patrone zum Filtern von Flüssigkeiten (10) nach Anspruch 1, **dadurch gekennzeichnet, dass** die Verbindungsmittel (31) aus mindestens einer Zunge (31a) bestehen und die komplementären Mittel (41) der Drainagevorrichtung (12) durch eine Nut (42) mit mindestens einem entsprechenden Schlitz (41a) gebildet sind, wobei die Zunge (31a) angepasst ist, in den Schlitz (41a) eingesetzt und in die Nut (42) gedreht zu werden.

3. Patrone zum Filtern von Flüssigkeiten (10) nach Anspruch 1, **dadurch gekennzeichnet, dass** die erste Oberfläche (13a) des zweiten Flansches (13) an der inneren Stützstruktur (27) befestigt ist.

4. Patrone zum Filtern von Flüssigkeiten (10) nach Anspruch 3, **dadurch gekennzeichnet, dass** das Filtermaterial (17) derart angeordnet ist, dass es eine innere Oberfläche (16) definiert, die in Kontakt mit der inneren Stützstruktur (27) ist, zum Bereitstellen von Oberflächen für den Durchgang der Flüssigkeit zu einem Auslasskanal des Filters.

## Revendications

1. Cartouche de filtration de liquides (10), comprenant :
- un filtre à cartouche (11) comprenant un premier rebord (19), un second rebord (13) et un matériau filtrant (17) maintenu entre ledit premier rebord (19) et ledit second rebord (13) et définissant une surface intérieure (16) ayant une section cylindrique, ledit second rebord (13) comportant une première surface (13a) reliée au matériau filtrant (17) et une seconde surface (13b) opposée à la première surface (13a), comprenant des moyens de prise amovibles (31) conçus pour pouvoir être fixés de manière amovible à un dispositif de drainage (12) ;
- ledit dispositif de drainage (12) comprenant un trou traversant (21) permettant le passage de liquide filtré en direction d'un canal de sortie du filtre, ledit dispositif de drainage (12) comprenant en outre des moyens complémentaires (41) disposés sur une première surface (12a) et pouvant être fixés de manière amovible auxdits moyens de prise (31) du second rebord (13), et une tige d'étanchéité (22) disposée sur une seconde surface (12b) opposée à la première surface (12a) du dispositif de drainage (12) et prévue pour assurer une étanchéité hydraulique du canal de purge de filtre ;
dans laquelle lesdits moyens de prise amovibles (31) sont constitués par un élément élastique et lesdits moyens complémentaires (41) sont constitués par une rainure (42), dans laquelle ledit premier rebord (19) a la forme d'un cylindre fermé doté d'une surface cylindrique interne (28) et d'une extrémité fermée (29) destinée à empêcher une fuite et une pollution de l'huile filtrée par l'huile restant à filtrer et fournit un couvercle supérieur sur le matériau filtrant (17), l'extrémité fermée (29) étant disposée transversalement à l'axe longitudinal du filtre à cartouche (11) et à l'intérieur d'une structure de support interne (27), ladite structure de support interne (27) comprenant des ouvertures conçues pour ne pas obstruer le passage du liquide à travers le matériau filtrant (17), **caractérisée en ce que** la surface cylindrique interne (28) du premier rebord (19) comprend un élément en dents de scie (28a) conçu de sorte qu'il puisse s'accoupler au couvercle du filtre lors du serrage du couvercle sur le boîtier de filtre.

2. Cartouche de filtration de liquides (10) selon la revendication 1, **caractérisée en ce que** lesdits moyens de prise (31) sont constitués par au moins une languette (31a) et **en ce que** lesdits moyens complémentaires (41) du dispositif de drainage (12) sont constitués par une rainure (42) dotée d'au moins une fente correspondante (41a), ladite languette (31a) étant apte à s'introduire dans ladite fente (41a) et à être entraînée en rotation à l'intérieur de la rainure (42).

3. Cartouche de filtration de liquides (10) selon la revendication 1, **caractérisée en ce que** ladite première surface (13a) dudit second rebord (13) est fixée à ladite structure de support interne (27).

4. Cartouche de filtration de liquides (10) selon la revendication 3, **caractérisée en ce que** ledit matériau filtrant (17) est disposé de façon à définir une surface intérieure (16) en contact avec ladite structure de support interne (27) de façon à établir des surfaces permettant le passage du liquide en direction d'un canal de sortie du filtre.
